# EUROPEAN PATENT APPLICATION

(11) **EP 4 801 081 A1**
(43) Date of publication of application: **02.09.2026**
(21) Application number: 25161169.5
(22) Date of filing: 28.02.2025
(51) Int. Cl.: H04W 4/80, G06Q 10/08, G06Q 10/087

(54) **AUTOMATED STORAGE AND RETRIEVAL SYSTEM**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to an automated storage and retrieval system comprising a reader and a part of the automated storage and retrieval system, the part comprising a transponder arranged to wirelessly communicate an identifier associated with the part to the reader when the transponder is within a reading range of the reader.

## Description

### TECHNICAL FIELD

The disclosure relates to an automated storage and retrieval system. More particularly, it relates to an automated storage and retrieval system comprising a reader and a part arranged to wirelessly communicate with the reader, and to a method for obtaining information about a part of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In order to maintain safe and proper functioning of the automated storage and retrieval system, certain parts of the automated storage and retrieval system may regularly need to be replaced. For example, parts of robots such as wheels, and parts of ports such as access doors, may regularly need to be replaced due to wear and tear.

According to a known solution, parts of the automated storage and retrieval system may be replaced on an ad-hoc basis (e.g., only when the parts fail), and records of replacement of parts may not be accurate, if kept at all.

Replacing parts on an ad-hoc basis may lead to inefficiencies due to delays in ordering replacement parts, and may compromise the safety and proper functioning of the automated storage and retrieval system. Furthermore, if accurate records of the replacement of parts are not kept, then unnecessary expenses may be incurred, for example if replacement parts are ordered when they are not needed.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an automated storage and retrieval system comprising a scanning area at a top level of a grid;
Fig. 6 shows an automated storage and retrieval system comprising a scanning area located outside of a grid;
Fig. 7 shows a robot for use in an automated storage and retrieval system, wherein the robot comprises a part comprising a transponder;
Fig. 8 shows a flow chart of a method for obtaining information about a part of an automated storage and retrieval system.

### DETAILED DESCRIPTION

The present disclosure will now be described in general terms before implementations of the disclosure are described by way of example with reference to the drawings. The word "may" is used to refer to a feature that is optional, i.e., in some implementations of the disclosure, the feature is present, and in some implementations of the disclosure, the feature is not present.

The present disclosure relates to an automated storage and retrieval system comprising: a reader, and a part of the automated storage and retrieval system, the part comprising a transponder arranged to wirelessly communicate an identifier associated with the part to the reader when the transponder is within a reading range of the reader.

The reading range is a range of possible distances between a reader and a transponder over which the reader and the transponder may wirelessly communicate.

The part may be a component of the automated storage and retrieval system. More particularly, the part may be a component of a robot, bin, port, service tower, service mezzanine, service area, transfer cell or conveyor of the automated storage and retrieval system. For example, the part may be a wheel of a robot, or a door of an access station of a port.

The transponder may comprise an RFID tag. The reader may comprise an RFID reader. The RFID tag may be a passive RFID tag or an active RFID tag. The RFID tag may be a low frequency, high frequency or ultra-high frequency RFID tag, depending on a required reading range for the intended application.

The reader may be a portable device, such as a smartphone or a handheld RFID reader.

The reader may be disposed at a scanning area of the automated storage and retrieval system.

The scanning area may comprise a volume arranged to allow the part to pass therethrough. The scanning area may comprise a structure surrounding at least a portion of the volume, wherein the structure comprises the reader. The scanning area may for example be an arch, a tunnel, or any other structure suitable for moving a part near or through. By moving multiple parts within the reading range of the scanning area or reader, the multiple parts may be simultaneously scanned by the reader.

The scanning area may:
- comprise an area of an upper level of a grid of the automated storage and retrieval system;
- comprise a structure (e.g., an arch or tunnel) supported by the upper level of the grid;
- be located within a column of the grid;
- be located proximate the grid; or
- be located at a port of the automated storage and retrieval system.

The scanning area may be integrated with a rail system of a grid of the automated storage and retrieval system, so that, for example, a robot may move to a certain part of the rail system in order for its parts to be scanned. The scanning area may also comprise a conveyor belt along which parts move towards the scanning area to be scanned.

The scanning area may also be located outside of the grid, so that parts may be scanned by the reader outside of the grid. In this way, parts of the automated storage and retrieval system may be scanned at any point during their lifecycle, for example at time of manufacture, or during maintenance or replacement works.

The present disclosure also relates to a method for obtaining information about a part of an automated storage and retrieval system (e.g., the automated storage and retrieval system described above).

The method includes steps of:
- causing the part to be within a reading range of the reader (e.g., by moving the reader to within a reading range of the part if the reader is a portable device, or by moving the part within the reading range of the reader if the reader is not portable);
- controlling the reader to wirelessly receive, from a transponder of the part, an identifier associated with the part; and
- determining, based on the identifier, information associated with the part.

Determining the information may comprise determining:
- a date and time when the part was installed or last replaced;
- an entity of which the part is (or is intended to be) a component;
- a mean time between failures;
- an expiry date;
- a workload threshold; and/or
- an identifier associated with a human operator or entity that installed or last replaced the part.

The method may further comprise steps of:
- notifying the automated storage and retrieval system if a length of time between a present date and the expiry date is less than a threshold; and/or
- initiating a process to order a replacement part.

In this way, the automated storage and retrieval system may automatically determine when a part needs replacing and then order the relevant replacement part. This may increase the efficiency of the automated storage and retrieval system by reducing downtime associated with delays in the ordering of replacement parts.

The method may further comprise a step of updating a record associated with the identifier. The record may be updated with information such as when the part was last replaced, and by whom or by which entity. The record may also be updated to reflect a stocked quantity of the part. Thus, accurate records may be kept of the quantity of parts in stock.

The method may further comprise steps of:
- determining that the part needs to be replaced (e.g., based on a determined expiry date and/or mean time between failures);
- replacing the part with a second part, the second part having a transponder arranged to wirelessly communicate to the reader an identifier associated with the second part; and
- scanning, by the reader, the transponder of the second part to obtain the identifier associated with the second part.

Prior to replacing the part with the second part, the method may further comprise:
- scanning, by the reader, the transponder of the second part to obtain an identifier associated with the second part; and
- determining, based on the identifier, whether the second part is to replace the part.

For example, it may be determined based on the identifier of the second part that the second part is of the correct type to replace the part, in which case the part may be replaced. On the other hand, it may be determined that the second part is of an incorrect type, in which case the part may not be replaced. Thus, parts of an automated storage and retrieval system may be accurately replaced, thereby reducing further maintenance work and therefore reducing downtime of the automated storage and retrieval system.

The second part may be a component of a robot of the automated storage and retrieval system, and scanning the transponder of the second part may comprise a step of causing the robot to be within a reading range of the reader.

### Automated storage and retrieval system overview

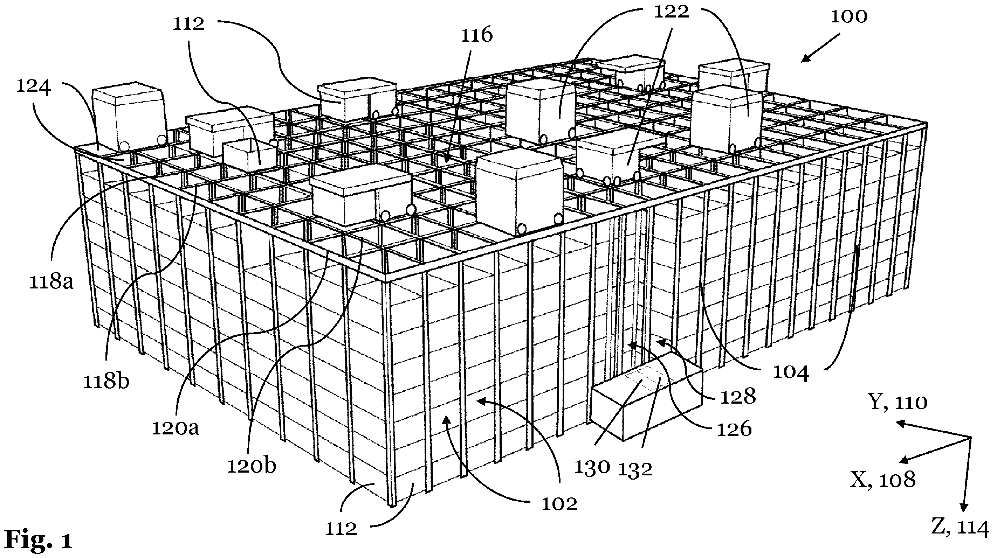

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

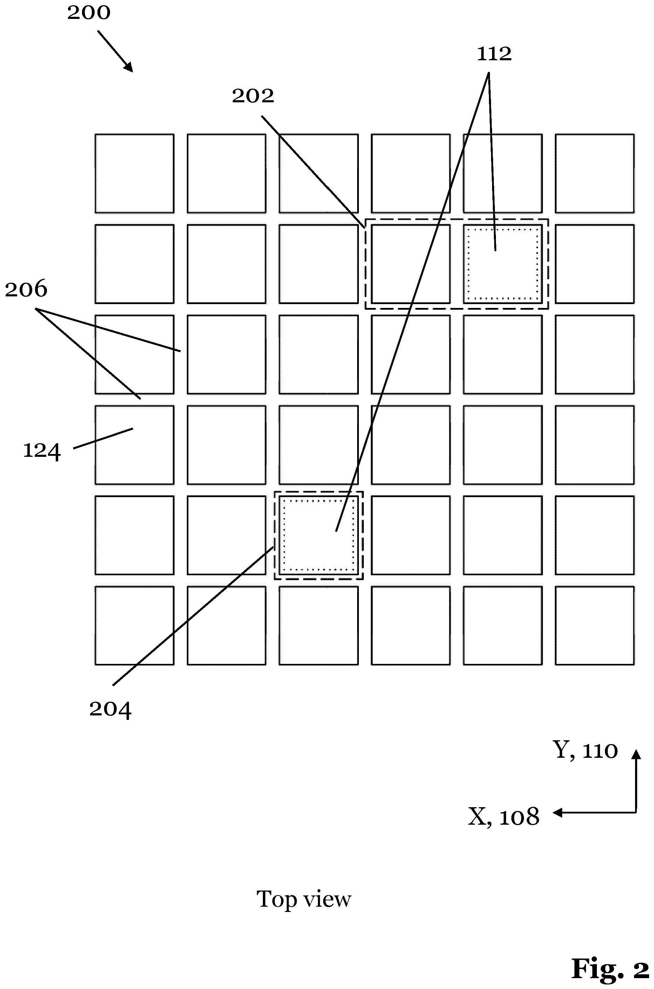

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

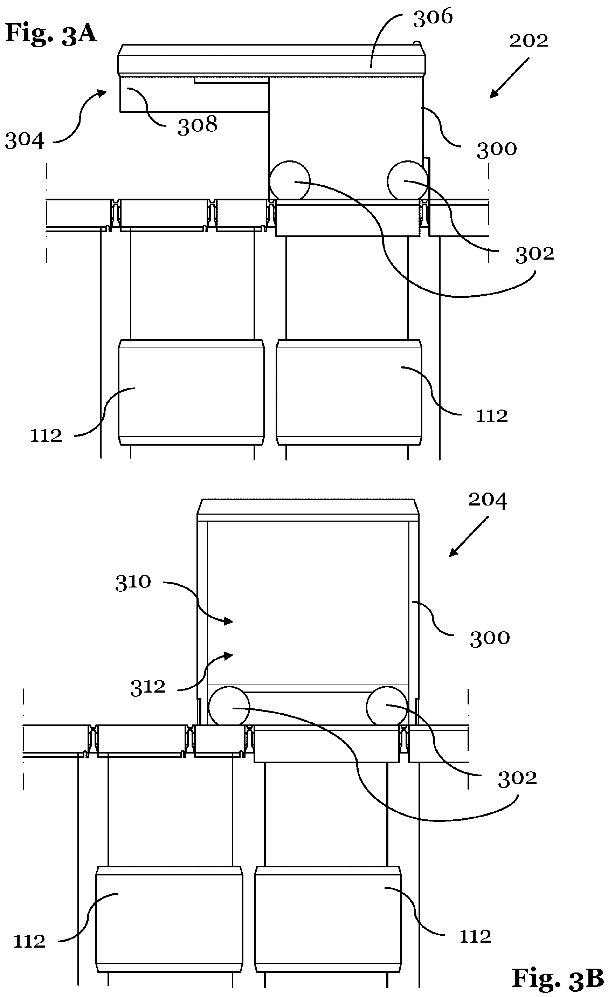

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

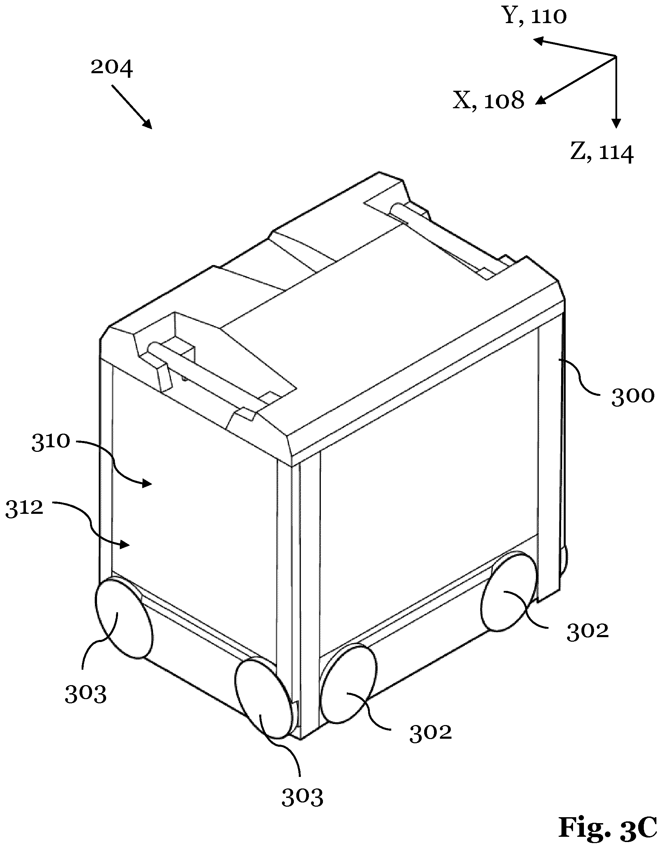

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

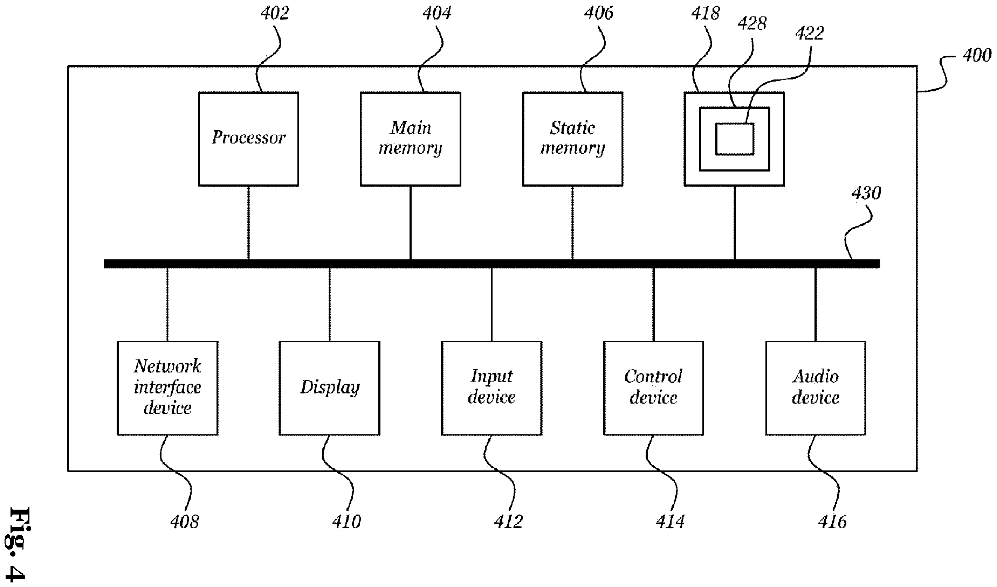

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Parts and readers

As described above, an automated storage and retrieval system (e.g., the system shown in Fig. 1) may comprise one or more robots 122 arranged to travel along an upper level (e.g., a rail system 116) of a grid 100 of the automated storage and retrieval system. Due to wear and tear, parts of a robot 122 may occasionally need to be replaced. For example, due to wear and tear caused by movement of the robot 122, the wheels of the robot 122 may occasionally need to be replaced to ensure proper and safe functioning of the robot 122.

Likewise, parts of the rail system 116, columns 102, ports 130, 132, bins 112, or any other part of the automated storage and retrieval system may occasionally need to be replaced in order to maintain proper and safe functioning of the automated storage and retrieval system.

According to a known automated storage and retrieval system, such parts are replaced on an ad-hoc basis (e.g., when a part of a robot 122 fails), and there is no record of which parts have been replaced when and by whom (or by which entity). This approach to replacing parts leads to inefficiencies and unnecessary costs.

For example, if a part of a robot 122 fails during operation of the automated storage and retrieval system, then the system or parts of it may need to be shut down so that the robot 122 can be retrieved (e.g., by a human operator or another robot 122) for repair. Such shutdowns may reduce an overall productivity of the automated storage and retrieval system.

Moreover, since it is not known when parts were last replaced, certain parts may be replaced unnecessarily (e.g., during routine maintenance procedures). For example, a part that has just recently been replaced may be replaced again, even if the original part is functioning and therefore does not need to be replaced. This may lead to unnecessary costs.

By way of example, implementations of the disclosure will now be described with reference to the drawings. Each possible combination of any features described below with any features described above also forms part of the disclosure.

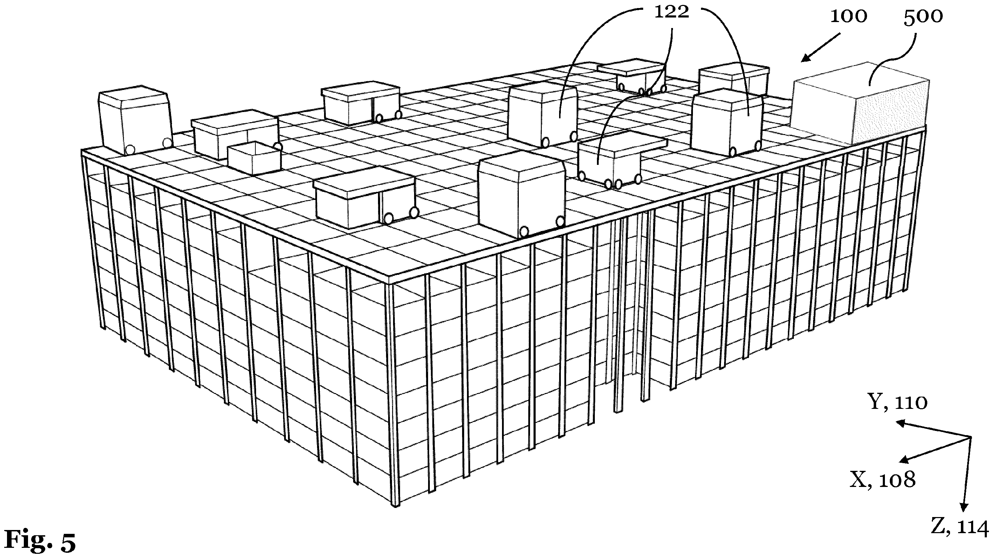

With reference to Fig. 5, a first automated storage and retrieval system according to the disclosure is described. The first automated storage and retrieval system corresponds to the automated storage and retrieval system of Fig. 1 in all respects apart from any differences that are apparent from the following description.

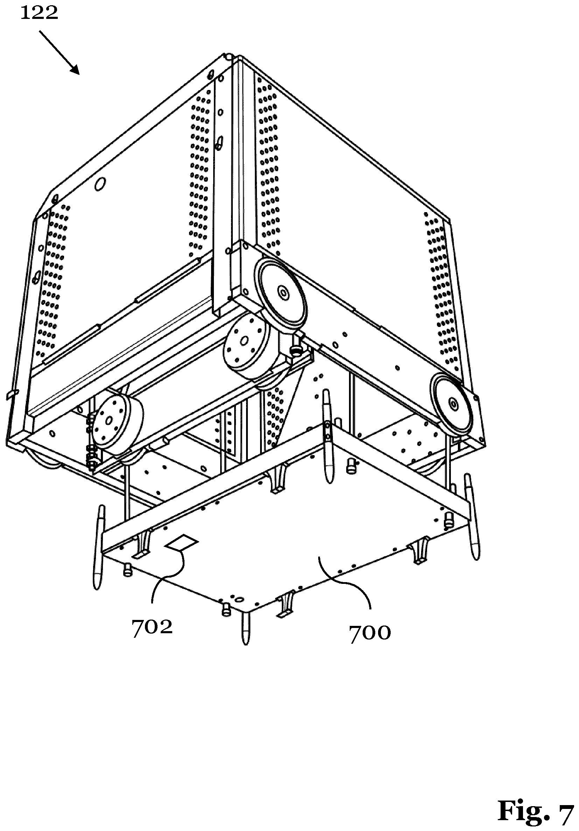

The automated storage and retrieval system of Fig. 5 comprises a reader (e.g., an RFID reader) and a part (e.g., a part 700 of a robot 122, as shown in Fig. 7, or any other component of the automated storage and retrieval system).

The part 700 comprises a transponder 702 (e.g., an RFID tag) arranged to wirelessly communicate an identifier associated with the part 700 to the reader when the transponder is within a reading range of the reader. As shown in Fig. 7, the transponder 702 may be affixed to a surface of the part 700. For example, the transponder 702 may be stickable onto the surface of the part 700. In this way, the transponder 702 may be affixed to the part 700 at any point during its lifecycle (e.g., at time of, or after, manufacture). Alternatively, the transponder 702 may be built into the part 700 (e.g., the transponder 702 is installed in the part 700 when the part 700 is manufactured and may be integral to the part 700).

The reading range is a range of possible distances between a reader and a transponder over which the reader and the transponder may wirelessly communicate. The reading range may depend on the particular reader or transponder 702 used. For example, if the transponder 702 is an RFID tag, then the reading range may be, for example, up to 10 centimetres if the tag is a low frequency RFID rag, between 10 centimetres and 1 metre if the tag is a high frequency RFID tag, and up to 12 metres for an ultra-high frequency tag.

The identifier communicated by the transponder 702 of the part 700 to the reader may be a number or any other piece of information that uniquely identifies the part 700. The identifier may be used as part of an information system that stores information about the parts of the automated storage and retrieval system. Such information may comprise:
- a date and time when the part was installed or last replaced;
- an entity of which the part is (or is intended to be) a component;
- a mean time between failure;
- an expiry date;
- a workload threshold; and/or
- an identifier associated with a human operator that installed or last replaced the part.

Thus, by bringing the part 700 within a reading range of the reader, information about the part 700, such as the example information types listed above, may be obtained.

Such information may be used by the automated storage and retrieval system to automatically determine whether the part 700 needs replacing. For example, if it is determined that an expiry date of the part 700 is upcoming (e.g., if the expiry date is within one month of the present date), then the system may flag that the part 700 needs replacing.

The information system may work in conjunction with an inventory system and an ordering system, so that if a part 700 is flagged as needing replacement and the inventory system indicates that there are few or no replacement parts in stock, then the ordering system may carry out a process to order one or more of the replacement parts. In this way, the entire process of determining which parts need replacing and ordering replacement parts may be automated, thereby leading to a more efficient automated storage and retrieval system. Furthermore, by ordering replacement parts in advance of when they are needed, downtime of the automated storage and retrieval system due to parts not being replaced in a timely fashion is reduced.

The reader may be a portable device, such as a smartphone or a handheld (RFID) reader. The reader may be brought near a part 700 by a human operator, for example. When the part 700 is within a reading range of the reader, the transponder 702 of the part 700 may wirelessly transmit the identifier associated with the part 700 to the reader.

A reader in the form of a portable device may be particularly suited when it is desired to scan one part 700 among many parts (where 'to scan' means to detect, by the reader, a wireless communication from the transponder 702 of the part 700). For example, a human operator may scan a particular part 700 of a robot 122 (e.g., one of several wheels) in order to obtain information about that part 700 without scanning or obtaining information about other parts. That said, a reader in the form of a portable device may also be used to scan multiple parts 700 at once. For example, the reader may be moved near or across multiple parts 700 to obtain information about all the parts simultaneously. A reader in the form of a smartphone, for instance, may be waved near or across multiple parts.

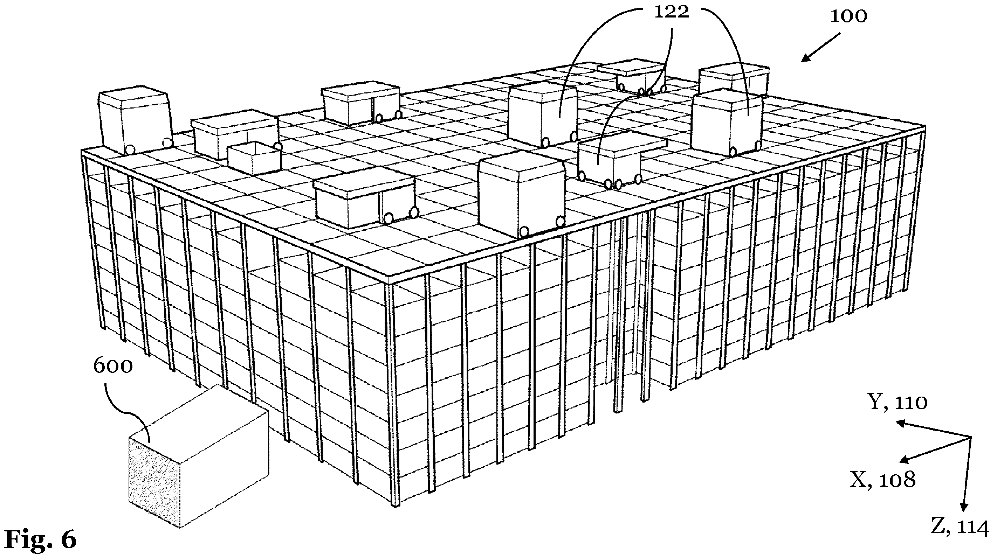

Alternatively, the reader may be disposed at a scanning area of the automated storage and retrieval system, which we now describe with reference to Figs. 5 and 6.

Figs. 5 and 6 each show an automated storage and retrieval system comprising a scanning area 500, 600. The scanning area 500, 600 is arranged so that a reader located at the scanning area may wirelessly communicate with a transponder 702 of a part 700 of the automated storage and retrieval system when the part 700 is within a reading range of the reader.

The scanning area 500, 600 may be further arranged so that the part 700 may be moved near to or through the scanning area 500, 600. For example, the scanning area 500, 600 may comprise a structure (e.g., an arch or a tunnel) with an opening through which the part 700 may be moved. When the part 700 moves through the opening, a reader of the scanning area 500, 600 may wirelessly communicate with a transponder 702 of the part 700. Alternatively, the scanning area 500, 600 may correspond to an area comprising one or more cells of an upper level of the grid 100, and the reader may for example be a part of the rail system 116 at those cells. Such scanning areas 500, 600 may be particularly well suited to scanning multiple parts 700 at once. For example, multiple parts 700 may be simultaneously moved near (e.g., within a reading range of) or through the scanning area in order to obtain information about the multiple parts simultaneously. For instance, a robot 122 comprising many parts 700 each having a transponder 702 may be moved through the scanning area 500, 600 in order to obtain information about the status of all parts 700 of the robot 122. In this way, each part 700 need not be scanned individually, thereby improving an efficiency of the scanning process.

The scanning area 500 of the automated storage and retrieval system of Fig. 5 is an area of an upper level of the grid 100. For example, the scanning area 500 may be located at one or more cells of the upper level of the grid 100. The scanning area 500 and the rail system 116 of the grid may be arranged so that a robot 112 comprising a part 700 with a transponder 702 may travel along the rail system 116 towards the scanning area 500, such that a reader at the scanning area 500 may wirelessly communicate with the transponder 702 of the part 700 when the part 700 moves near (e.g., within a reading range of) or through the scanning area 500.

Alternatively, the scanning area 500 may be located at another position within the automated storage and retrieval system, such as within a column of the grid 100 or at a port 130, 132 of the automated storage and retrieval system. A scanning area 500 located within a column of the grid 100 may be particularly suited to scanning (parts of) bins 112 which are lifted and/or lowered through the column. Likewise, a scanning area 500 located at a port 130, 132 of the automated storage and retrieval system may be well suited to scanning bins 112 which are delivered to the port 130, 132, but also other items that may be passed near or through the scanning area 500 at the port 130, 132. The scanning area 500 may also be located at an area of the grid 100 dedicated to service and maintenance, such as a service area (e.g., a service tower or service mezzanine) where human operators may perform maintenance on parts of the automated storage and retrieval system. In another example, the scanning area may be located outside the grid 100, which is now described with reference to Fig. 6.

The automated storage and retrieval system of Fig. 6 corresponds to the automated storage and retrieval system of Figs. 1 and 5 in all respects apart from any differences that are apparent from the following description.

With reference to Fig. 6, the scanning area 600 of the automated storage and retrieval system is located outside of the grid 100. In particular, the scanning area 600 is located proximate the grid, although the skilled person will appreciate that the scanning area 600 may be located at any appropriate position outside the grid 100. The scanning area 600 of the automated storage and retrieval system of Fig. 6 operates in the same or a similar manner as the scanning area 500 of the automated storage and retrieval system described with reference to Fig. 5. That is, when a part 700 with a transponder 702 is moved near (e.g., within a reading range of) or through the scanning area 600, a reader of the scanning area 600 may wirelessly communicate with the transponder 702. The part 700 may be moved near (e.g., within a reading range of) or through the scanning area 600 by way of a conveyor belt (not shown). Additionally or alternatively, the conveyor belt itself may comprise a reader, thereby functioning as a scanning area 600.

As with the scanning area 500 of the system of Fig. 5, the scanning area 600 of the automated storage and retrieval system of Fig. 6 may scan multiple parts 700 simultaneously. For example, multiple parts 700 may be simultaneously moved near (e.g., within a reading range of) or through the scanning area in order to obtain information about the multiple parts simultaneously. For instance, a robot 122 comprising many parts 700 each having a transponder 702 may be moved through the scanning area 500, 600 in order to obtain information about the status of all parts 700 of the robot 122. In this way, each part 700 need not be scanned individually, thereby improving an efficiency of the scanning process.

### Methods of operation

Also disclosed herein is a method for obtaining information about a part of an automated storage and retrieval system, wherein the system comprises a reader (as in the systems described above with reference to Figs. 5 and 6) and the part comprises a transponder arranged to wirelessly communicate an identifier associated with the part to the reader when the transponder is within a reading range of the reader transponder (e.g., as described above with reference to Fig. 7).

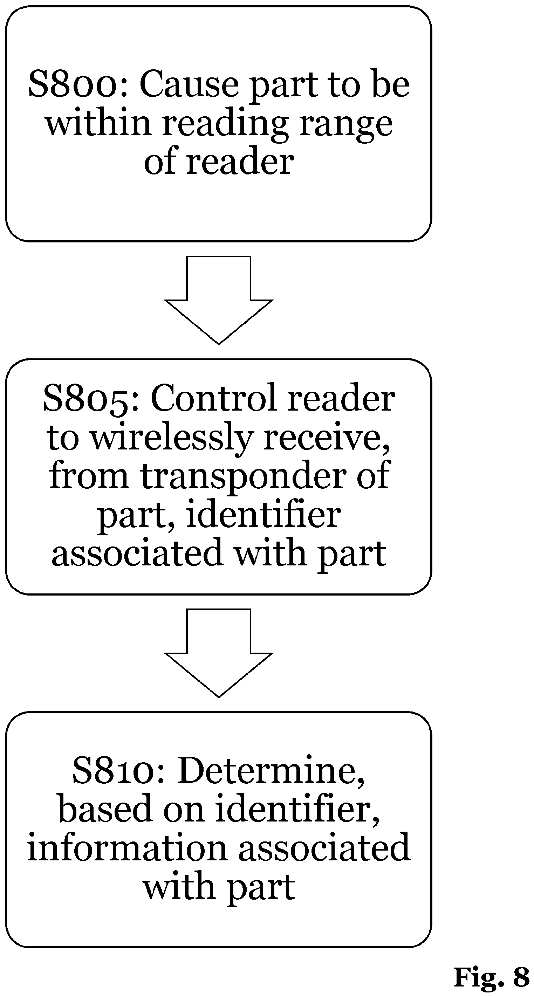

Fig. 8 shows a flow chart of such a method. The method begins at step S800.

At step S800, the method causes the part 700 to be within a reading range of the reader. Step S800 may comprise moving the reader (if it is a portable device) towards the part 700 such that the part 700 is within the reading range of the reader. Alternatively, if the reader is a component of a scanning area 500, 600 of a grid 100 of the automated storage and retrieval system (as shown in Figs. 5 and 6), then step S800 may comprise moving the part 700 towards the scanning area 500, 600, for example by moving the part 700 using a robot 122 of the automated storage and retrieval system, or by moving the part 700 along, for instance, a conveyor belt towards the scanning area 500, 600. When the part 700 is at or near (e.g., within a reading range of) the scanning area 500, 600, the transponder 702 of the part 700 and the reader may be sufficiently close that wireless communication may occur between them.

Thus, at step S805, the method controls the reader to wirelessly receive, from the transponder 702 of the part 700, an identifier associated with the part 700. Once received, the identifier may be stored on a storage medium of the reader, and/or the identifier may be transmitted to another storage medium of the automated storage and retrieval system, such as a main, static, or secondary memory 404, 406, 418 of a processing system 400 of the automated storage and retrieval system (e.g., the processing system 400 depicted in Fig. 4).

Then, at step S810, the method determines, based on the identifier, information associated with the part 700. The determined information may comprise, for example:
- a date and time when the part was installed or last replaced;
- an entity of which the part is (or is intended to be) a component;
- a mean time between failures;
- an expiry date;
- a workload threshold; and/or
- an identifier associated with a human operator or entity that installed or last replaced the part.

This information may be determined for example by transmitting a request to an information system (such as a database) along with the identifier.

The request may comprise one or more flags to indicate which types of information are requested. For example, the request may include a flag indicating that information about an expiry date of the part 700 is requested.

The method may then perform further actions based on the received information. For example, on receipt of an expiry date of the part 700, the method may further perform a step of notifying the automated storage and retrieval system (e.g., the processing system 400 of the automated storage and retrieval system) if a length of time between a present date and the expiry date is less than a threshold. In other words, the automated storage and retrieval system may be notified if the part 700 is close to its expiry date and therefore needs replacing. In this case, the method may then initiate a process (e.g., via an ordering system) to order a replacement part.

In this way, the entire process of determining which parts need replacing and ordering replacement parts may be automated, thereby leading to a more efficient automated storage and retrieval system. Furthermore, by ordering replacement parts in advance of when they are needed, downtime of the automated storage and retrieval system due to parts not being replaced in a timely fashion may be reduced, thereby improving the efficiency and productivity of the automated storage and retrieval system.

As well as or instead of requesting information about the part 700 from an information system, the method may comprise a step of updating a record associated with the identifier. For example, a record (e.g., stored in a database) associated with the identifier may be updated to include information such as when the transponder 702 of the part 700 last communicated with the reader, and by whom (or by which entity) the part 700 was scanned. In this way, the information system may store accurate records of when and by whom or by which entity the part 700 was scanned (during, for example, replacement of the part 700). Moreover, the information system updated in this way may store accurate records of stocked quantities of parts 700 of the automated storage and retrieval system. In a similar manner, the information system may be updated to include information such as the frequency with which a part 700 has been replaced, thereby providing information on which parts of the automated storage and retrieval system fail most often, for example.

The determined information may also be used during repair and/or replacement of parts 700 of the automated storage and retrieval system. For example, based on the determined information (e.g., an expiry date, a mean time between failure or a workload threshold), the method may determine that the part 700 needs to be replaced.

The method may then comprise a step of replacing the part 700 with a second part, wherein the second part also comprises a transponder arranged to wirelessly communicate to the reader an identifier associated with the second part. Before or after the second part has replaced the part 700, the second part may be scanned by the reader to obtain the identifier associated with the second part. In a similar manner as described above, the second part may be scanned by the reader to determine information about the second part. For example, the method may determine, based on the identifier of the second part, whether the second part should replace the part 700 (e.g., whether the second part is of the correct type and specification to replace the part 700). Similarly, the method may determine whether the second part is a genuine part.

Once the second part has replaced the part 700, the second part may once again be scanned by the reader, and the reader may transmit the identifier of the second part to, for example, the processing system 400 of the automated storage and retrieval system in order to record information about the replacement of the part 700 by the second part (such as a time and/or date when the replacement occurred).

### Penultimate comments

Although the above description refers to 'readers' (such as RFID tags) and 'transponders' (such as RFID readers), the skilled person will appreciate that the systems and methods disclosed herein may use QR code readers and QR codes and/or bar code readers and bar codes instead of or in addition to the described readers and transponders, respectively.

Each possible combination of any of the above-described features forms part of the present disclosure. A plurality of instances of any feature may also be present.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a reader; and
a part of the automated storage and retrieval system, the part comprising a transponder arranged to wirelessly communicate an identifier associated with the part to the reader when the transponder is within a reading range of the reader.

2. The automated storage and retrieval system of claim 1, wherein the part is a component of the automated storage and retrieval system.

3. The automated storage and retrieval system of claim 1 or 2, wherein the part is a component of a robot, bin, port, service tower, service mezzanine, service area, transfer cell or conveyor of the automated storage and retrieval system.

4. The automated storage and retrieval system of any preceding claim, wherein the transponder comprises an RFID tag and the reader comprises an RFID reader; and optionally, wherein the RFID tag is a passive RFID tag or an active RFID tag.

5. The automated storage and retrieval system of any preceding claim, wherein the reader is a portable device.

6. The automated storage and retrieval system of any preceding claim, wherein the reader is disposed at a scanning area of the automated storage and retrieval system.

7. The automated storage and retrieval system of claim 6, wherein the scanning area comprises a volume arranged to allow the part to pass therethrough.

8. The automated storage and retrieval system of claim 7, wherein the scanning area comprises a structure surrounding at least a portion of the volume, the structure comprising the reader.

9. The automated storage and retrieval system of any of claims 6 to 8, wherein the scanning area:
comprises an area of an upper level of a grid of the automated storage and retrieval system;
comprises a structure supported by the upper level of the grid;
is located within a column of the grid;
is located proximate the grid; or
is located at a port of the automated storage and retrieval system.

10. A method for obtaining information about a part of an automated storage and retrieval system of any of claims 1 to 9, the method comprising:
causing the part to be within a reading range of the reader;
controlling the reader to wirelessly receive, from a transponder of the part, an identifier associated with the part; and
determining, based on the identifier, information associated with the part.

11. The method of claim 10, wherein determining the information comprises determining an expiry date of the part, and optionally, the method further comprising:
notifying the automated storage and retrieval system if a length of time between a present date and the expiry date is less than a threshold; and/or
initiating a process to order a replacement part.

12. The method of claim 10 or 11, further comprising updating a record associated with the identifier.

13. The method of any of claims 10 to 12, further comprising:
determining that the part needs to be replaced;
replacing the part with a second part, the second part having a transponder arranged to wirelessly communicate to the reader an identifier associated with the second part; and
scanning, by the reader, the transponder of the second part to obtain the identifier associated with the second part.

14. The method of claim 13, wherein prior to replacing the part with the second part, the method further comprises:
scanning, by the reader, the transponder of the second part to obtain an identifier associated with the second part; and
determining, based on the identifier, whether the second part is to replace the part.

15. The method of claim 13 or 14, wherein the second part is a component of a robot of the automated storage and retrieval system, and wherein scanning the transponder of the second part comprises causing the robot to be within a reading range of the reader.
